# EUROPEAN PATENT SPECIFICATION

(11) **EP 2 927 771 B1**
(45) Date of publication and mention of the grant of the patent: **31.01.2024**
(21) Application number: 14305488.0
(22) Date of filing: 03.04.2014
(51) Int. Cl.: G08G 5/04, G08G 5/00, G05D 1/10

(54) **FLYING DRONE TRAJECTORY SYNCHRONIZATION**
TRAJEKTORIESYNCHRONISATION EINER FLIEGENDEN DROHNE
SYNCHRONISATION DE TRAJECTOIRE DE DRONE VOLANT

(43) Date of publication of application: 07.10.2015
(73) Proprietor: Dronisos, 33130 Bègles (FR)
(72) Inventor: Vermeulen, Koert, B-1190 BRUSSELS (BE); Buys, Koen, B-1981 HOFSTADE (BE)
(74) Representative: Ipside

(56) References cited:
- EP-A1- 2 226 779
- WO-A1-2013/163746
- GB-A- 2 476 149
- US-A- 5 581 250
- US-A1- 2007 156 286
- US-A1- 2008 002 190
- US-A1- 2012 136 481
- US-A1- 2013 120 547

## Description

### Field of the Invention

The present invention relates to flying drones, and notably to Vertical Take-Off Landing (VTOL) flying drones. The present invention relates more particularly but not exclusively to methods for controlling a flying drone trajectory and for synchronizing the trajectory of several flying drones.

### Background

There is currently a tremendous development of technologies in the field of flying drones, also called Unmanned Aerial Vehicles (UAV). As is known, these flying drones comprise a memory for storing a forecasted flying trajectory and a control and a command computer for driving drone directional means and motorization. The trajectory is defined by a list of 3D coordinates points, and the control and command computer is connected to the memory for reading the forecasted trajectory so that the flying drone is able to move along said forecasted trajectory.

Besides, there is also an increasing demand for sets of autonomous flying drones, whether for civil or military applications. However, once several autonomous flying drones have to move together in a given space, comes the problem of their synchronization. More precisely, even if each flying drone is preprogrammed with a forecasted trajectory to follow, even a very slight deviation from the desired synchronization between two or more flying drones can lead to potential disastrous effects such as crashs. Such effects are likely to be of high criticity if there is some public in the vicinity.
WO2013/163746A1 discloses a system comprising a control station for remotely controlling unmanned aerial vehicles ("UAV"). The control station is configured to display vehicle status data received from each UAV, including displaying a location of each UAV in a single interface. US2012/136481 A1 discloses the use of a timeline to synchronize the movements of a robot but the timeline is not associated at a trajectory and is not synchronize to a timecode. EP2226779A1 discloses an avoidance system too but based on scenario built from flight parameters, and not on synchronization of flying trajectory with a timecode.

In the context of VTOL flying drones, some solutions exist for controling the trajectory of the flying drones and for synchronizing the trajectories.

For instance, some systems have been proposed that include fixed sensors such as cameras, which are arranged on the ground, and a central coordinator. The central coordinator, arranged on the ground as well, is adapted to receive measure signals from the sensors and to send control signals to the flying drones in order to ajust in quasi real time the position of each flying drone relative to the others. However, such systems provide little flexibility, since the drones space flight has to be permanently in the field of the cameras. This has the disadvantage of limiting the flight area. Moreover, these systems are of high complexity because of the number of position calculations performed by the central coordinator.

Other systems have also been proposed, using for example a "master-slave" technology. More precisely, the flying drones in such systems include means for communicating with each other. One of the flying drones is programmed for having unidirectional control over the other flying drones, so as to ensure synchronization between the drones. However, such systems require a high bandwith for data transfer and are relatively complex because of the number of control calculations performed.

### Summary

To overcome at least one of the aforementioned drawbacks, an object of this invention is a flying drone comprising:
- a memory for storing a 3D coordinates;
- a control and command computer for driving drone directional and motorization means, said control and command computer being connected to the memory for reading 3D coordinates so that the flying drone is able to move to the 3D coordinates; and
- a wireless receptor able to receive a synchronization signal emitted from a central coordinator comprising a timecode, said timecode comprising a sequence of digital codes generated at predetermined intervals, said synchronization signal allowing the flying drone to be synchronized with other flying drones; and
- the control and command computer is adapted for synchronizing the flying drone timeline with the synchronization signal.

Advantageously, the memory stores a list of 3D coordinates points defining a forecasted flying trajectory, each 3D coordinate point being associated a time relative to either the time of the previous 3D coordinates point either to a reference time, said times constituting a timeline, and said control and command computer is adapted to read the forecasted flying directory in order to move sequentially the flying drone to each 3D coordinate at the corresponding time.

The flying drone may include additional characteristics considered separately or combined, and notably:
- the timeline is implemented by adding to each 3D coordinates point a time relative to either the time of the previous 3D coordinates point either to a reference time;
- the 3D coordinates points are stored as GNSS coordinates and said flying drone further comprises a GNSS receiver connected to said control and command computer for controlling the drone trajectory.

In another embodiment of the invention, a system comprises a plurality of flying drones as described above and a central coordinator, said central coordinator storing a timecode and comprising a timecode reader connected to a wireless emitter, said wireless emitter being adapted to transmit to the wireless receptor of each drone a synchronization signal from the timecode.

The system may include additional characteristics considered separately or combined, and notably:
- the timecode is a SMPTE standardized timecode;
- the central coordinator further comprises means for controlling a lighting system and/or a sound system and said timecode has light and/or sound synchronization elements so that the drones, the light and/or the sound are synchronized together.

In another embodiment of the invention, a method for controlling a flying drone trajectory, said drone comprising:
- a memory for storing a forecasted flying trajectory;
- a control and command computer for driving drone directional and motorization means, said control and command computer being connected to the memory for reading the forecasted trajectory so that the flying drone is able to move along said forecasted trajectory;
comprises:
- storing in said memory a forecasted flying trajectory comprising a list of 3D coordinates points associated to a timeline;
- receiving through a wireless receptor a synchronization signal emitted from a timecode;
- synchronizing the timeline with the synchronization signal;
- executing the synchronized flying trajectory.

In another embodiment of the invention, a method for synchronizing the trajectory of a plurality of flying drones, comprises:
- a step of storing a timecode in a central coordinator;
- a step of transmitting, from the timecode, a synchronization signal to each of the flying drones;
- a submethod for controlling a flying drone trajectory such as the one above introduced, the submethod being implemented by each flying drone.

Advantageously, the synchronizing method allows a simple, flexible and accurate synchronization between the plurality of flying drones, using a low bandwith and without requiring any central complex position calculation.

The method may include additional characteristics considered separately or combined, and notably:
- the method further comprises, prior to the step of transmitting the synchronization signal, a step of simulating, in a simulation device operating in an offline mode, a trajectory of each flying drone, and a step of generating each forecasted flying trajectory comprising the list of 3D coordinates points associated to the timeline, based on the results of the simulating step, the generating step being implemented by said simulation device;
- the method further comprises, prior to the step of transmitting the synchronization signal, a step of transmitting each forecasted flying trajectory to the corresponding flying drone.

### Brief Description of the Figures

Some embodiments of apparatus and/or methods in accordance with embodiments of the present invention are now described, by way of example only, and with reference to the accompagnying drawings, in which :
- The Figure 1 schematically illustrates a system according to an embodiment of the invention, the system comprising three flying drones and a central coordinator, each flying drone comprising a memory for storing a list of 3D coordinates points,
- The Figure 2 schematically illustrates the content of one of the lists of 3D coordinates points of Figure 1,
- The Figure 3 schematically illustrates a system according to an alternative embodiment of the invention, the system comprising three flying drones, a central coordinator, and a simulation device,
- The Figure 4 is a flowchart illustrating a method for synchronizing the trajectory of the flying drones of Figures 1 or 3 according to an embodiment of the invention, the method comprising a submethod for controlling each flying drone trajectory, and
- The Figure 5 schematically illustrates the submethod for controlling each flying drone trajectory of Figure 4, according to an embodiment of the invention.

### Description of Embodiments

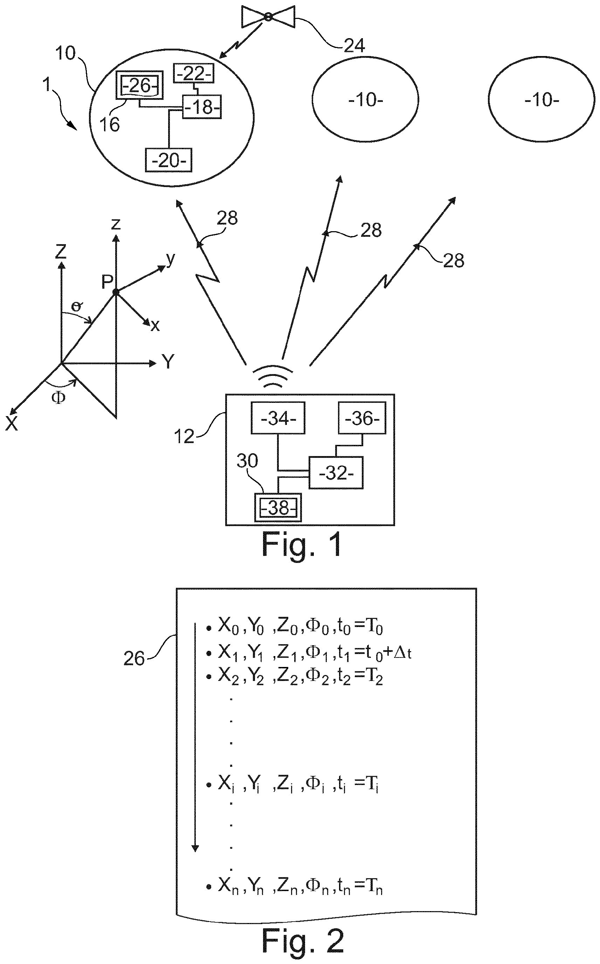

In the following, it is referred to a fixed orthogonal frame including a horizontal plane X, Y and a vertical axis Z, and to a mobile orthogonal frame related to a given device P and including a horizontal plane x, y and a vertical axis z. The origin of the mobile orthogonal frame is located at the center of the device P and indicates the orientation of the device P. In the following, it is also referred to spherical coordinates with angles thêta e (0°...90°) and phi φ (0°...360°). The coordinate of the given device P along the vertical axis Z corresponds to the altitude of said device P, as illustrated on Figure 1. The angle φ corresponds to the rotation angle of the mobile horizontal plane x, y in the fixed orthogonal frame, with respect to the vertical axis Z.

Hereafter is notably disclosed a system 1 which comprises at least one flying drone 10 and a central coordinator 12.

In the exemplary embodiment of Figure 1, the system 1 comprises three flying drones 10, each flying drone 10 being a VTOL flying drone.

Each flying drone 10 comprises a memory 16, a control and command computer 18 connected to the memory 16, and a wireless receptor 20 connected to the control and command computer 18.

Preferably, as shown in Figure 1, each flying drone 10 is further equipped with positioning means 22 adapted for communicating with a satellite positioning system 24. Conventionally, each flying drone 10 further comprises autonomous power sources and directional and motorization means which are for example formed of one or several propellers, one or several motors, one or several sensors and/or one or several motordrive devices. These elements are not illustrated on Figure 1 for clarity reasons. In a particular embodiment, each flying drone 10 is adapted for supporting one or more payload elements, such as for example lighting devices, such payload elements being not shown in Figure 1 for clarity.

The memory 16 stores a forecasted flying trajectory. The forecasted flying trajectory is defined by a list 26 of 3 dimensions (3D) coordinates points.

The 3D coordinates points are associated to a timeline and define a list of waypoints. The list 26 is for example in the form of a file. In the exemplary embodiment of Figures 1 and 2, the list 26 is in the form of a file that is marked up in the Extensible Markup Language (XML). In this exemplary embodiment, apart from n sets of 3D coordinates values Xi, Yi, Zi, the list 26 further comprises n orientation angle values φᵢ. Each set of 3D coordinates values Xi, Yi, Zi defines a waypoint. For example, the first set of 3D coordinates values X1, Y1, Z1 defines a takeoff waypoint and the last set of 3D coordinates values Xn, Yn, Zn defines a landing waypoint, as will be further described below. Each orientation angle value φᵢ is associated to one set of 3D coordinates values Xi, Yi, Zi, i.e. to one waypoint. This allows to futher define, for each waypoint, the orientation of the flying drone 10 with respect to the vertical axis Z, and thus to enhance the positioning accuracy of the flying drone 10. In this exemplary embodiment, the timeline is implemented by adding to each set of 3D coordinates values Xi, Yi, Zi a time ti. Each time ti is thus associated to one set of 3D coordinates values Xi, Yi, Zi and to one orientation angle value φᵢ. Preferably, as illustrated on Figure 2, each time ti is relative to either the time of the previous 3D coordinates point, for example by means of an offset value Δt, either to a reference time T0, T2, Tn. This allows increasing the flexibility of the implementation of the timeline.

In a particular embodiment, which is not illustrated on the Figures, the list 26 further comprises n velocity values, each velocity value being associated to one set of 3D coordinates values Xi, Yi, Zi. Thanks to this feature combined with the application of a known interpolation algorithm, the flying drone 10 is able to retrace a flying trajectory that follows a Beziers curve. The use of Beziers curves allow to homogenize the flying trajectories of the flying drones, as will be described in further details below.

The control and command computer 18 is for example formed of a processor. The control and command computer 18 is adapted for driving the drone directional and motorization means. The control and command computer 18 is further adapted for reading the forecasted trajectory stored in the memory 16 so that the flying drone 10 is able to move along said forecasted trajectory, and for synchronizing the timeline with a synchronization signal 28 emitted from a timecode. In the exemplary embodiment of Figure 2, the control and command computer 18 is adapted to synchronize the first time t0 with the synchronization signal 28, to read the content of the list 26 and to send control signals to the directional and motorization means in order to move sequentially the flying drone 10 to each waypoint Xi, Yi, Zi at the corresponding time ti, with the corresponding angle orientation φᵢ. In a particular embodiment, the control and command computer 18 is further adapted for sending control signals to payload elements that are supported by the flying drone 10.

The wireless receptor 20 is able to receive the synchronization signal 28.

The positioning means 22 are connected to the control and command computer 18 for controlling the drone trajectory. In the exemplary embodiment of Figure 1, the positioning means 22 are for example formed of a Global Navigation Satellite System (GNSS) receiver. According to this embodiment, the 3D coordinates points are stored in the memory 16 as GNSS coordinates.

The central coordinator 12 is arranged at a fixed location, for example on the ground. The central coordinator 12 comprises a memory 30, a timecode reader 32 connected to the memory 30, and a wireless emitter 34 connected to the timecode reader 32. In a particular embodiment illustrated in Figure 1, the central coordinator 12 further comprises means 36 for controlling a lighting system and/or a sound system, said means 36 being connected to the timecode reader 32.

The memory 30 stores a timecode 38. The timecode 38 is a time reference, more precisely a sequence of digital codes generated at predetermined intervals and sent to various devices of the central coordinator 12. One of the digital codes is sent at least once to the wireless emitter 34, via the timecode reader 32, and corresponds to a clock initialization time of the synchronization signal 28. In a particular embodiment, the digital code corresponding to the clock initialization time of the synchronization signal 28 is periodically sent to the wireless emitter 34 for performing a periodic transmission of the synchronization signal 28 to the flying drones 10. This allows to enhance the security of the system 1. In the exemplary embodiment of Figure 1, some other digital codes of the timecode 38 are sent to the means 36 for controlling a lighting system and/or a sound system, via the timecode reader 32, so that the flying drones 10, the light and/or the sound are synchronized together. The timecode 38 is thus intended to synchronize several physical components of a system, such as for example the physical components of an entertainment sound, light and motion system. In the exemplary embodiment of Figure 1, the timecode 38 is a Society of Motion Picture and Television Engineers (SMPTE) timecode.

The timecode reader 32 is for example a processor.

The wireless emitter 34 is adapted, upon reception of transmitting instructions from the timecode reader 32, to transmit the synchronization signal 28 to the wireless receptor 20 of each flying drone 10.

The controlling means 36 are adapted, upon reception of transmitting instructions from the timecode reader 32, to transmit control signals to the lighting system and/or to the sound system, which are not illustrated on the Figures.

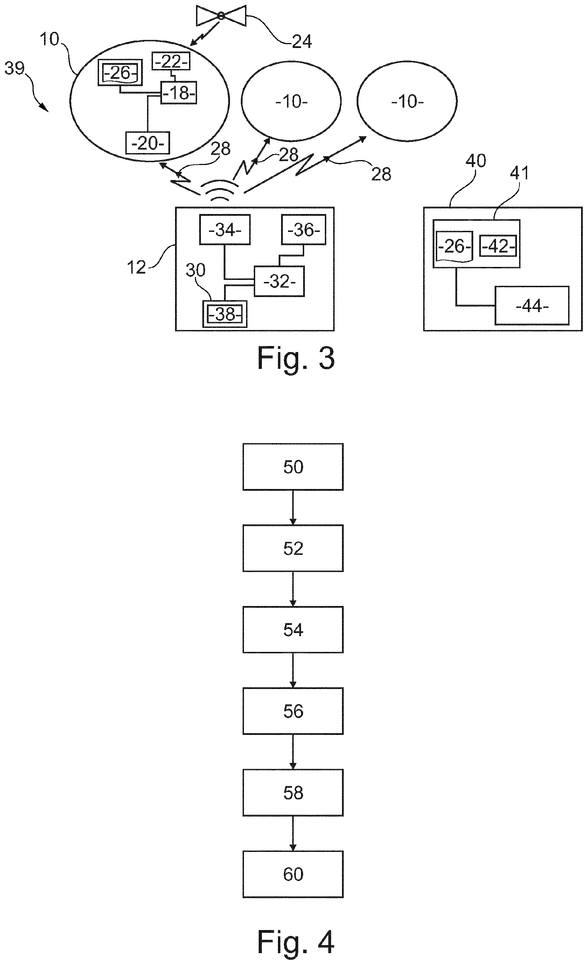

Figure 3 illustrates a system 39 according to an alternative embodiment of the invention, complementary but independent of the embodiment shown in Figure 1. In this embodiment, elements similar to the previous embodiment are denoted by identical references, and are therefore not described again. In this embodiment the system 39 according to the invention further comprises a simulation device 40.

The simulation device 40 is for example formed of a computer system which includes a memory 41 storing a simulation software 42, and a processor 44 connected to the memory 40. The simulation device 14 is adapted to operate in an offline mode.

The simulation software 42 is adapted, when executed by the processor 44, to simulate a trajectory of at least one of the flying drones 10 and to generate at least one of said forecasted flying trajectory comprising a list 26 of 3D coordinates points associated to a timeline, based on the results of the simulation. The simulation software 42 thus notably allows a user to visualize any potential movement incompatibility between at least two flying drones 10. Preferably, the simulation device 14 further include means for transmitting the or each generated flying trajectory to the corresponding flying drone 10, said transmitting means not being illustrated on the Figures for clarity purpose.

Preferably, the simulation software 42 is further adapted, when executed by the processor 44, to synchronize the or each simulated flying trajectory with the timecode 38. This feature allows modeling in real conditions the kinematics of the flying drones 10, and thus to get a model of a complete system operating in real conditions, such as for example an entertainment system, including movements of flying drones that belong to the system. Preferably, the simulation software 42 is further adapted to define a predetermined 2D or 3D zone around each simulated flying drone, said predetermined zone moving, during the simulation, with the corresponding flying drone along the simulated flying trajectory. The predetermined zone corresponds to a security zone and allows performing security tests and/or security checks concerning potential collisions between the drones. This feature advantageously allows reducing the risk of collision between the flying drones 10, and thus increasing the security of the system 1.

Preferably, the simulation software 42 is further adapted to calculate, for each simulated flying drone, one or more Beziers curve(s). These calculated Beziers curves allow to homogenize the simulated flying trajectory of each simulated flying drone.

In a particular embodiment, the simulation software 42 is further adapted to simulate one or more payload elements supported by the simulated flying drones. This allows to automatically model the behaviour of such elements, such as for example the behaviour of lighting elements, on the flying drones.

The method for synchronizing the trajectory of the flying drones 10 according to the invention will now be described, with reference to Figure 4.

In a first step 50, the timecode 38 is stored in the memory 30 of the central coordinator 12.

According to the particular embodiment of Figure 3, in a following step 52, the simulation software 42 of the simulation device 14 is executed, upon instructions of a user, by the processor 44. The simulation software 42 then simulates the trajectory of each flying drone 10. According to this embodiment, in a following step 54, the simulation software 42 generates each forecasted flying trajectory comprising a list 26 of 3D coordinates points associated to a timeline, based on the results of the simulation. In a particular embodiment, each list 26 is in the form of an XML file. Preferably, in the particular embodiment of Figure 3, the simulation device 14 transmits each generated flying trajectory to the corresponding flying drone 10, during a following step 56. This transmitting step 56 allows to export and to implement automatically each generated flying trajectory in the memory 16 of the corresponding flying drone 10.

Alternatively, the steps 52, 54 and 56 are performed in parallel of the first step 50.

In a following step 58, common to the embodiments of Figures 1 and 3, the timecode reader 32 reads the timecode 38. One of the digital codes of the timecode 38 corresponding to a clock initialization time of the synchronization signal 28 is then sent to the wireless emitter 34, via the timecode reader 32. During this step 58 the wireless emitter 34 then transmits the synchronization signal 28 to the wireless receptor 20 of each flying drone 10. In the exemplary embodiments of Figures 1 and 3, some other digital codes of the timecode 38 are sent to the means 36 for controlling a lighting system and/or a sound system, via the timecode reader 32. This allows to synchronize the flying drones 10, the light and/or the sound together.

In a following submethod 60, common to the embodiments of Figures 1 and 3, each flying drone 10 implements the method for controlling a flying drone trajectory according to the invention.

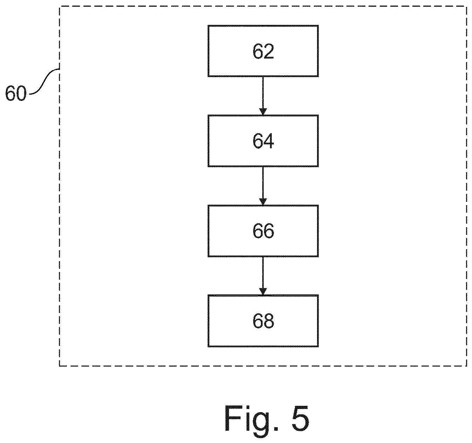

The method 60 for controlling a flying drone trajectory is illustrated on Figure 5.

In a first step 62, the memory 16 of each flying drone 10 stores the forecasted flying trajectory comprising a list 26 of 3D coordinates points associated to a timeline. Alternatively, the step 62 is performed prior to the step 58 of transmitting the synchronization signal 28.

In a following step 64, the wireless receptor 20 of each flying drone 10 receives the synchronization signal 28 emitted from the timecode 28. At the end of this step 64, the wireless receptor 20 of each flying drone 10 transmits the synchronization signal 28 to the control and command computer 18 of the corresponding flying drone 10.

In a following step 66, the control and command computer 18 of each flying drone 10 synchronizes the timeline stored in the memory 16 of the corresponding flying drone with the received synchronization signal 28. In the exemplary embodiment of Figure 2, the control and command computer 18 synchronizes the first time t0 of the list 26 with the synchronization signal 28.

In a following step 68, each flying drone 10 executes the synchronized flying trajectory. More precisely, during this step 68, the control and command computer 18 of each flying drone 10 reads the forecasted trajectory stored in the memory 16 and sends control signals to the drone directional and motorization means. The flying drone 10 then moves along said forecasted trajectory. In the exemplary embodiment of Figure 2, the control and command computer 18 reads the content of the list 26 and sends control signals to the directional and motorization means. Based on these control signals, the flying drone 10 then moves sequentially to each waypoint Xi, Yi, Zi at the corresponding time ti, with the corresponding angle orientation φᵢ.

Thus, the method 60 for controlling a flying drone trajectory according to the invention allows providing the flying drones 10 with full autonomy as to their flying path. Besides, in the system comprising the flying drones 10 according to the invention, the timelines are distributed within all the flying drones. This feature allows overcoming any constraint about the bandwidth required to communicate with the drones or about the number of drones used simultaneously.

The method for synchronizing the trajectory of a plurality of flying drones according to the invention offers several advantages:
- it provides a simple, flexible and accurate synchronization between the plurality of flying drones, using a low bandwith and without requiring any central complex position calculation;
- it allows to free some computing power in the central coordinator.

A person of skill in the art would readily recognize that the functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Flying drone (10) comprising:
• a memory (16) for storing a 3D coordinate;
• a control and command computer (18) for driving drone directional and motorization means, said control and command computer (18) being connected to the memory (16) for reading 3D coordinate so that the flying drone (10) is able to move to the 3D coordinate;
**characterized in that**
the memory (16) stores a list (26) of 3D coordinates points defining a forecasted flying trajectory, each 3D coordinate point being associated a time relative to either the time of the previous 3D coordinates point either to a reference time, said times constituting a timeline, and said control and command computer (18) is adapted to read the forecasted flying directory in order to move sequentially the flying drone (10) to each 3D coordinate at the corresponding time;
the flying drone (10) further comprises:
• a wireless receptor (20) able to receive a synchronization signal (28) emitted from a central coordinator comprising a timecode (38), said timecode comprising a sequence of digital codes generated at predetermined intervals, said synchronization signal allowing the flying drone to be synchronized with other flying drones; and
• the control and command computer (18) is adapted for synchronizing the flying drone timeline with the synchronization signal (28).

2. Flying drone (10) according to claim 1, wherein the 3D coordinates points are stored as GNSS coordinates and said flying drone (10) further comprises a GNSS receiver (22) connected to said control and command computer (18) for controlling the drone trajectory.

3. System (1; 39) comprising a plurality of flying drones (10) according to any one of the preceding claims and a central coordinator (12), said central coordinator (12) storing a timecode (38) and comprising a timecode reader (32) connected to a wireless emitter (34), said wireless emitter (34) being adapted to transmit to the wireless receptor (20) of each drone (10) a synchronization signal (28) from the timecode (38).

4. System (1; 39) according to claim 3, wherein the timecode (38) is a SMPTE standardized timecode.

5. System (1; 39) according to claim 3 or 4, wherein the central coordinator (12) further comprises means (36) for controlling a lighting system and/or a sound system and said timecode (38) has light and/or sound synchronization elements so that the drones (10), the light and/or the sound are synchronized together.

6. Method (60) for controlling a flying drone trajectory, said drone (10) being a drone according to claims 1 or 2, said method being **characterized in that** it comprises:
• storing (62) in said memory (16) the forecasted flying trajectory comprising a list (26) of 3D coordinates points associated to a timeline;
• receiving (64) through the wireless receptor (20) the synchronization signal (28);
• synchronizing (66) the timeline with the synchronization signal (28);
• executing (68) the synchronized flying trajectory.

7. Method for synchronizing the trajectory of a plurality of flying drones (10) according to claim 1 or 2, said method comprising:
• a step (50) of storing a timecode (38) in a central coordinator (12);
• a step (58) of transmitting, from the timecode (38), a synchronization signal (28) to each of the flying drones (10);
• a submethod (60) for controlling a flying drone trajectory according to claim 6, the submethod (60) being implemented by each flying drone (10).

8. Method according to claim 7, wherein the method further comprises, prior to the step (58) of transmitting the synchronization signal (28), a step (52) of simulating, in a simulation device (40) operating in an offline mode, a trajectory of each flying drone (10), and a step (54) of generating each forecasted flying trajectory comprising the list (26) of 3D coordinates points associated to the timeline, based on the results of the simulating step (52), the generating step (54) being implemented by said simulation device (40).

9. Method according to claim 8, wherein the method further comprises, prior to the step (58) of transmitting the synchronization signal (28), a step (56) of transmitting each forecasted flying trajectory to the corresponding flying drone (10).

## Patentansprüche

1. Flugdrohne (10) umfassend:
• einen Speicher (16) zum Speichern einer 3D-Koordinate;
• einen Steuer- und Befehlsrechner (18) zur Steuerung der Richtungs- und Motorisierungsmittel der Drohne, wobei der Steuer- und Befehlsrechner (18) mit dem Speicher (16) verbunden ist, um die 3D-Koordinaten abzulesen, sodass sich die Flugdrohne (10) zu den 3D-Koordinaten bewegen kann;
**dadurch gekennzeichnet, dass**
der Speicher (16) eine Liste (26) von 3D-Koordinatenpunkten speichert, die eine prognostizierte Flugbahn definieren, wobei jedem 3D-Koordinatenpunkt eine Zeit zugeordnet ist, die entweder der Zeit des vorhergehenden 3D-Koordinatenpunkts oder einer Referenzzeit entspricht, wobei diese Zeiten eine Zeitachse bilden, und der Steuer- und Befehlsrechner (18) eingerichtet ist, das prognostizierte Flugverzeichnis abzulesen, um die Flugdrohne (10) nacheinander zu jeder 3D-Koordinate zum entsprechenden Zeitpunkt zu bewegen;
die Flugdrohne (10) umfasst ferner:
• einen drahtlosen Empfänger (20), der in der Lage ist, ein Synchronisationssignal (28) aufzunehmen, umassend einen Zeitcode (38), der von einem zentralen Koordinator ausgestrahlt wird, dieser Zeitcode umfassend eine Sequenz von digitalen Codes, die in vorbestimmten Intervallen erstellt werden, dieses Synchronisationssignal ermöglicht die Synchronisation der Flugdrohne mit anderen Flugdrohnen; und
• der Steuerungs- und Befehlsrechner (18) ist eingerichtet, um die Zeitachse der Flugdrohne mit dem Synchronisationssignal (28) zu synchronisieren.

2. Flugdrohne (10) nach Anspruch 1, wobei die 3D-Koordinatenpunkte als GNSS-Koordinaten gespeichert sind und die Flugdrohne (10) ferner einen GNSS-Empfänger (22) umfasst, der mit dem Steuerungs- und Befehlsrechner (18) zur Steuerung der Flugbahn der Drohne verbunden ist.

3. System (1; 39) umfassend eine Vielzahl von Flugdrohnen (10) nach einem der vorstehenden Ansprüche und einen zentralen Koordinator (12), wobei der zentrale Koordinator (12) einen Zeitcode (38) speichert und umfassend einen Zeitcodeleser (32), der mit einem drahtlosen Sender (34) verbunden ist, wobei der drahtlose Sender (34) geeignet ist, ein Synchronisationssignal (28) aus dem Zeitcode (38) an den drahtlosen Empfänger (20) jeder Drohne (10) zu senden.

4. System (1; 39) nach Anspruch 3, wobei der Zeitcode (38) ein SMPTE-standardisierter Zeitcode ist.

5. System (1; 39) nach Anspruch 3 oder 4, wobei der zentrale Koordinator (12) ferner Mittel (36) zur Steuerung eines Beleuchtungssystems und/oder eines Geräusches umfasst und der Zeitcode (38) Licht- und/oder Geräusch-Synchronisationselemente aufweist, sodass die Drohnen (10), das Licht und/oder das Geräusch zusammen synchronisiert werden.

6. Verfahren (60) zur Steuerung einer Flugbahn einer Flugdrohne, wobei die Drohne (10) eine Drohne nach Anspruch 1 oder 2 ist, wobei das Verfahren **dadurch gekennzeichnet ist, dass** es Folgendes umfasst:
• Speichern (62) der prognostizierten Flugbahn in dem Speicher (16), umfassend eine Liste (26) von 3D-Koordinatenpunkten, die einer Zeitlinie zugehörig sind;
• Empfangen (64) des Synchronisationssignals (28) durch den drahtlosen Empfänger (20);
• Synchronisieren (66) der Zeitachse mit dem Synchronisationssignal (28);
• Ausführen (68) der synchronisierten Flugbahn.

7. Verfahren zum Synchronisieren der Flugbahn einer Vielzahl von Flugdrohnen (10) nach Anspruch 1 oder 2, das Verfahren umfassend:
• einen Schritt (50) des Speicherns eines Zeitcodes (38) in einem zentralen Koordinator (12);
• einen Schritt (58) des Sendens eines Synchronisationssignals (28) vom Zeitcode (38) zu jeder der Flugdrohnen (10);
• ein Unterverfahren (60) zur Steuerung einer Flugbahn einer Flugdrohne nach Anspruch 6, wobei das Unterverfahren (60) von jeder Flugdrohne (10) implementiert wird.

8. Verfahren nach Anspruch 7, wobei das Verfahren ferner vor dem Schritt (58) des Übertragens des Synchronisationssignals (28) einen Schritt (52) des Simulierens einer Flugbahn jeder Flugdrohne (10) in einer in einem Offline-Modus arbeitenden Simulationsvorrichtung (40) und einen Schritt (54) des Erstellens jeder vorhergesagten Flugbahn, umfassend die Liste (26) von 3D-Koordinatenpunkten, die der Zeitachse zugeordnet sind, basierend auf den Ergebnissen des Simulationsschritts (52) umfasst, wobei der Erzeugungsschritt (54) von der Simulationsvorrichtung (40) ausgeführt wird.

9. Verfahren nach Anspruch 8, wobei das Verfahren ferner vor dem Schritt (58) des Sendens des Synchronisationssignals (28) einen Schritt (56) des Sendens jeder vorhergesagten Flugbahn an die entsprechende Flugdrohne (10) umfasst.

## Revendications

1. Drone volant (10) comprenant :
• une mémoire (16) pour stocker une coordonnée 3D ;
• un ordinateur de contrôle et de commande (18) pour entraîner des moyens directionnels et de motorisation de drone, ledit ordinateur de contrôle et de commande (18) étant relié à la mémoire (16) pour lire une coordonnée 3D de sorte que le drone volant (10) soit apte à se déplacer jusqu'à la coordonnée 3D ;
**caractérisé en ce que**
la mémoire (16) stocke une liste (26) de points de coordonnées 3D définissant une trajectoire de vol prévue, chaque point de coordonnées 3D étant associé à un temps relatif au temps du point de coordonnées 3D précédent ou à un temps de référence, lesdits temps constituant une chronologie, et ledit ordinateur de contrôle et de commande (18) est apte à lire la trajectoire de vol prévue afin de déplacer séquentiellement le drone volant (10) à chaque coordonnée 3D au temps correspondant ;
le drone volant (10) comprend en outre :
• un récepteur sans fil (20) apte à recevoir un signal de synchronisation (28) émis depuis un coordinateur central comprenant un code temporel (38), ledit code temporel comprenant une séquence de codes numériques générés à des intervalles prédéterminés, ledit signal de synchronisation permettant au drone volant d'être synchronisé avec d'autres drones volants ; et
• l'ordinateur de contrôle et de commande (18) est apte à synchroniser la chronologie du drone volant avec le signal de synchronisation (28).

2. Drone volant (10) selon la revendication 1, dans lequel les points de coordonnées 3D sont stockés en tant que coordonnées GNSS et ledit drone volant (10) comprend en outre un récepteur GNSS (22) relié audit ordinateur de contrôle et de commande (18) pour commander la trajectoire du drone.

3. Système (1 ; 39) comprenant une pluralité de drones volants (10) selon l'une quelconque des revendications précédentes et un coordinateur central (12), ledit coordinateur central (12) stockant un code temporel (38) et comprenant un lecteur de code temporel (32) relié à un émetteur sans fil (34), ledit émetteur sans fil (34) étant apte à transmettre, au récepteur sans fil (20) de chaque drone (10), un signal de synchronisation (28) à partir du code temporel (38).

4. Système (1 ; 39) selon la revendication 3, dans lequel le code temporel (38) est un code temporel standardisé SMPTE.

5. Système (1 ; 39) selon la revendication 3 ou 4, dans lequel le coordinateur central (12) comprend en outre des moyens (36) pour commander un système d'éclairage et/ou un système sonore et ledit code temporel (38) présente des éléments de synchronisation de lumière et/ou de son de sorte que les drones (10), la lumière et/ou le son soient synchronisés entre eux.

6. Procédé (60) de commande d'une trajectoire de drone volant, ledit drone (10) étant un drone selon la revendication 1 ou 2, ledit procédé étant **caractérisé en ce qu'**il comprend :
• le stockage (62), dans ladite mémoire (16), de la trajectoire de vol prévue comprenant une liste (26) de points de coordonnées 3D associés à une chronologie ;
• la réception (64), par l'intermédiaire du récepteur sans fil (20), du signal de synchronisation (28) ;
• la synchronisation (66) de la chronologie avec le signal de synchronisation (28) ;
• l'exécution (68) de la trajectoire de vol synchronisée.

7. Procédé de synchronisation de la trajectoire d'une pluralité de drones volants (10) selon la revendication 1 ou 2, ledit procédé comprenant :
• une étape (50) de stockage d'un code temporel (38) dans un coordinateur central (12) ;
• une étape (58) de transmission, à partir du code temporel (38), d'un signal de synchronisation (28) à chacun des drones volants (10) ;
• un sous-procédé (60) de commande d'une trajectoire de drone volant selon la revendication 6, le sous-procédé (60) étant mis en œuvre par chaque drone volant (10).

8. Procédé selon la revendication 7, dans lequel le procédé comprend en outre, avant l'étape (58) de transmission du signal de synchronisation (28), une étape (52) de simulation, dans un dispositif de simulation (40) fonctionnant dans un mode hors-ligne, d'une trajectoire de chaque drone volant (10), et une étape (54) de génération de chaque trajectoire de vol prévue comprenant la liste (26) de points de coordonnées 3D associés à la chronologie, sur la base des résultats de l'étape de simulation (52), l'étape de génération (54) étant mise en œuvre par ledit dispositif de simulation (40).

9. Procédé selon la revendication 8, dans lequel le procédé comprend en outre, avant l'étape (58) de transmission du signal de synchronisation (28), une étape (56) de transmission de chaque trajectoire de vol prévue au drone volant (10) correspondant.
